# EUROPÄISCHE PATENTANMELDUNG

(11) **EP 1 178 593 A1**
(43) Veröffentlichungstag der Anmeldung: **06.02.2002**
(21) Anmeldenummer: 00810695.7
(22) Anmeldetag: 02.08.2000
(51) Int. Cl.: H02M 7/00

(54) **Halbleiter-Spannstapelsatz**

(71) Anmelder: ABB Industrie AG, 5400 Baden (CH)
(72) Erfinder: Grüning, Horst, 5430 Wettingen (CH)
(74) Vertreter: ABB Patent Attorneys

(57) **Zusammenfassung**

Ein Halbleiter-Spannstapelsatz (32) weist mindestens zwei Spannstapel auf, wobei jeder dieser Spannstapel mehrere Leistungshalbleiterbauelemente (LH) (8) und mehrere Kühlkörper (6) aufweist, welche entlang einer horizontal verlaufenden Achsrichtung (A) in Reihe angeordnet sind. Erfindungsgemäss sind LH (8) aus unterschiedlichen Spannstapeln einander zugeordnet und befinden sich in einer gemeinsamen Montageebene, welche senkrecht zu den Achsrichtungen (A) der Spannstapel (31) liegt. Einander zugeordnete LH (8) sind in eine gemeinsame Montagerichtung, welche in der Montageebene liegt, aus dem Spannstapelsatz entfernbar respektive in den Spannstapelsatz einsetzbar. Vorzugsweise sind einander zugeordnete LH (8) auf einer gemeinsamen Platte (14) montiert. Dadurch können sie bei entspanntem Spannstapelsatz (32) demontiert werden, ohne dass weitere LH oder Kühlkörper demontiert werden müssen. Die Platte (14) wird in Rahmenstangen (1) des Spannstapelsatzes (32) eingehängt oder in Führungsschienen (18) geführt.

## Beschreibung

### Technisches Gebiet

Die Erfindung bezieht sich auf das Gebiet der Leistungshalbleitertechnik. Sie betrifft einen Halbleiter-Spannstapelsatz, insbesondere für Stromrichter, gemäss dem Oberbegriff des Patentanspruches 1.

### Stand der Technik

Bei bekannten wassergekühlten Stromrichtern hoher Leistung wird eine Mehrzahl von Leistungshalbleiterbauelementen (LH) in einer Serieschaltung alternierend mit wasserdurchflossenen Kühldosen zu einem Stapel oder Spannstapel vereint. Die notwendigen elektrischen und thermischen Eigenschaften werden durch mechanisches Verspannen mittels Zugstangen erreicht. Zum Auswechseln eines defekten LH wird der Spannstapel entspannt, wobei sämtliche Komponenten weiterhin in ihrer stapelachsenzentrierten Position gehalten werden müssen.

Bei der neuesten Generation von Leistungshalbleiterschaltern für Hochleistungsstromrichter ist ein in einem Presspack-Gehäuse untergebrachter GTO(Gate turn Off)-Thyristor, IGBT (Insulated Gate Bipolar Transistor) oder ein IGCT (Insulated Gate Controlled Thyristor) mit einer Platine verbunden, auf welcher auch die zugehörige Ansteuereinheit angeordnet ist. Ein solcher Halbleiter-Spannstapelsatz mit horizontalen Spannstapeln ist z.B. aus der Druckschrift P. Steimer et al. "Serieschaltung von GTO-Thyristoren für Frequenzumrichter hoher Leistung", ABB Technik 5 (1996), S. 14-20 bekannt. Darin wird in Bild 5 gezeigt, wie LH und Ansteuerung eine austauschbare Einheit bilden.

Aus der DE 198 30 424 A1 ist ein Formteil zur Halterung von Kühlkörpern in einem vertikalen Spannstapel bekannt. Dieses hält einen Kühlkörper und ein unmittelbar benachbartes, auf einer Platine montiertes LH. Ein einzelnes LH eines einzelnen Stapels kann ausgetauscht werden, indem der Stapel entspannt und mit einem Spezialwerkzeug aufgedrückt wird. Dies führt zu einer schweren Belastung von angrenzenden LH.

Bei einer Kombination mehrerer Spannstapel zu einem Spannstapelsatz wie in der obengenannten Druckschrift von P. Steimer et al. versperren die einen Spannstapel den Zugang zu anderen, dahinter liegenden Spannstapeln. Dadurch wird ein Zugang zum Auswechseln von LH erschwert. Dies führt dazu, dass entweder die Spannstapel mit einem grossen Abstand zueinander angeordnet werden, oder dass ausreichend Raum um einen Spannstapelsatz herum vorhanden sein muss, um einen Zugriff auf alle Spannstapel zu erlauben. Solche Anordnungen verhindern eine kompakte Bauweise eines Umrichters. Eine kompakte Bauweise ist möglich, falls ein Spannstapelsatz oder Phasenbaustein als Ganzes entfernbar oder austauschbar ist, so dass ein einfacher Zugriff auf die LH im entfernten Spannstapelsatz möglich ist. Dies führt jedoch zu einem beträchtlichen Aufwand, indem zum Austausch eines einzigen defekten LH der ganze Spannstapelsatz ausgebaut werden muss.

### Darstellung der Erfindung

Es ist deshalb Aufgabe der Erfindung, einen Halbleiter-Spannstapelsatz der eingangs genannten Art zu schaffen, welcher die oben genannten Nachteile behebt.

Diese Aufgabe löst ein Halbleiter-Spannstapelsatz mit den Merkmalen des Patentanspruches 1.

Der Halbleiter-Spannstapelsatz weist mindestens zwei Spannstapel auf, wobei jeder dieser Spannstapel mehrere Leistungshalbleiterbauelemente (LH) und mehrere Kühlkörper aufweist, welche entlang einer horizontal verlaufenden Achsrichtung in Reihe angeordnet sind, wobei die Spannstapel parallel zueinander in einem gemeinsamen Rahmen angeordnet sind, und wobei die LH auf Trägerelementen montiert sind. Erfindungsgemäss sind LH aus unterschiedlichen Spannstapeln einander zugeordnet und befinden sich in einer gemeinsamen Montageebene, welche senkrecht zu den Achsrichtungen der Spannstapel liegt, und sind einander zugeordnete LH in eine gemeinsame Montagerichtung, welche in der Montageebene liegt, aus dem Spannstapelsatz entfernbar respektive in den Spannstapelsatz einsetzbar.

Dadurch wird es möglich, eines oder mehrere der einander zugeordneten LH in die gemeinsame Montagerichtung aus dem Spannstapelsatz zu entfernen, ohne dass weitere LH oder Kühlkörper demontiert werden müssen. Die LH (8) sind also durch Zugriff von nur einer Seite des Spannstapelsatzes (32) her austauschbar, und es ist nicht erforderlich, dass ein Bereich um einen oder um mehrere Spannstapel freigehalten werden muss, oder dass der Spannstapelsatz ausgebaut werden muss. Damit entsteht ein kompakter Spannstapelsatz, der sehr einfach zu warten ist, da LH mit einem geringen Aufwand austauschbar sind. Durch die kompakte Bauweise kann auch eine Streuinduktivität von Verbindungsleitern verringert werden.

Vorzugsweise verfügen die einander zugeordneten LH über gemeinsame Befestigungsmittel zur Befestigung an einem Rahmen des Spannstapelsatzes. In einer ersten Ausführungsform der Erfindung sind diese gemeinsamen Befestigungsmittel durch Führungsmittel eines Trägerelements mit mehreren darauf montierten LH gebildet. Diese Führungsmittel werden in entsprechende zweite Verbindungselemente, welche mit dem Rahmen verbunden sind, eingehängt, oder unmittelbar im Rahmen eingehängt. In einer zweiten Ausführungsform der Erfindung sind diese gemeinsamen Befestigungsmittel durch Führungsschienen gebildet, welche eines oder mehrere Trägerelemente mit jeweils einem oder mehreren darauf montierten LH führen. In beiden Ausführungsformen dienen die gemeinsamen Befestigungsmittel dazu, die einander zugeordneten LH festzuhalten, wenn einer oder mehrere der Spannstapel des Spannstapelsatzes entspannt sind, also nicht unter Druck stehen. Weiter erlauben die gemeinsamen Befestigungsmittel, die einander zugeordneten LH in die gemeinsame Montagerichtung zu bewegen und aus dem Spannstapelsatz zu entfernen.

Die gemeinsamen Befestigungsmittel weisen den Vorteil auf, dass die LH im entspannten Zustand des Spannstapelsatzes ihre Lage ohne zusätzliche Teile zur Halterung beibehalten und dabei aber auch auf einfache Weise austauschbar sind.

In einer bevorzugten Ausführungsform der Erfindung sind die Spannstapel des Spannstapelsatzes horizontal angeordnet, so dass in einem entspannten Stapel einzelne LH nicht durch das Gewicht von darüberliegenden LH und Kühlkörpern festgehalten oder eingeklemmt werden. Dadurch werden auch keine Spezialwerkzeuge oder mechanische Hilfsmittel benötigt, um Kühlkörper beim Ersetzen eines LH auseinanderzudrücken.

In einer weiteren bevorzugten Ausführungsform der Erfindung sind Kühlkörper aus mehreren Spannstapeln einander zugeordnet und befinden sich einander zugeordnete Kühlkörper in einer gemeinsamen Ebene, welche senkrecht zu den Achsrichtungen der Spannstapel liegt. Vorzugsweise werden die einander zugeordneten Kühlkörper mittels einer gemeinsamen Kühlkörperhalterung mit dem Rahmen verbunden. Die gemeinsame Halterung mehrerer Kühlkörper verringert die Anzahl von Teilen eines Spannstapelsatzes und vereinfacht die Montage.

Vorzugsweise wird eine elektrische Verschienung einander zugeordneter Kühlkörper durch Bleche gebildet, so dass eine niederinduktive elektrische Verbindung entsteht.

Weitere bevorzugte Ausführungsformen gehen aus den abhängigen Patentansprüchen hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen:
- Figur 1: eine perspektivische Ansicht dreier erfindungsgemässer Spannstapelsätze in einem gemeinsamen Rahmen;
- Figur 2: schematisch eine elektrische Schaltung entsprechend der Anordnung von Figur 1;
- Figur 3: eine perspektivische Ansicht einer Hälfte eines Spannstapelsatzes;
- Figur 4: eine schematische Detailansicht eines erfindungsgemässen Spannstapels in einer ersten Ausführungsform der Erfindung;
- Figuren 5 bis 7: perspektivische Detailansichten eines erfindungsgemässen Spannstapels in der ersten Ausführungsform der Erfindung, mit teilweise entfernten LH;
- Figur 8: schematisch eine erfindungsgemässe Anordnung von Zwischenkreisblechen;
- Figuren 9 und 10: schematische Detailansichten einer Variante der ersten Ausführungsform der Erfindung;
- Figur 11: schematische eine weitere Variante der ersten Ausführungsform der Erfindung;
- Figur 12: eine schematische Detailansicht einer zweiten Ausführungsform der Erfindung; und
- Figuren 13 bis 15: schematische Darstellungen verschiedener Varianten von Trägerelementen gemäss der zweiten Ausführungsform der Erfindung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

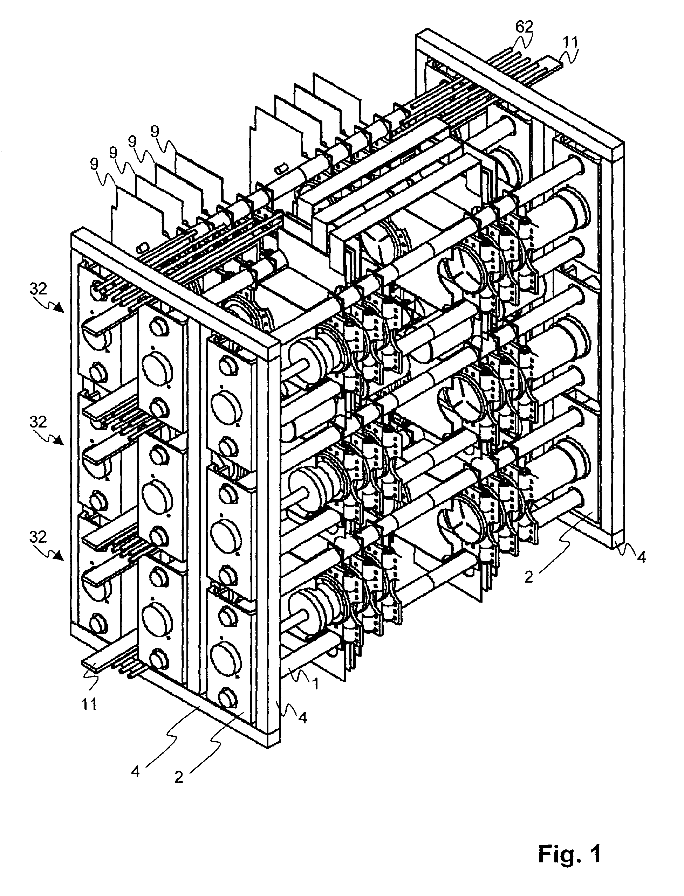

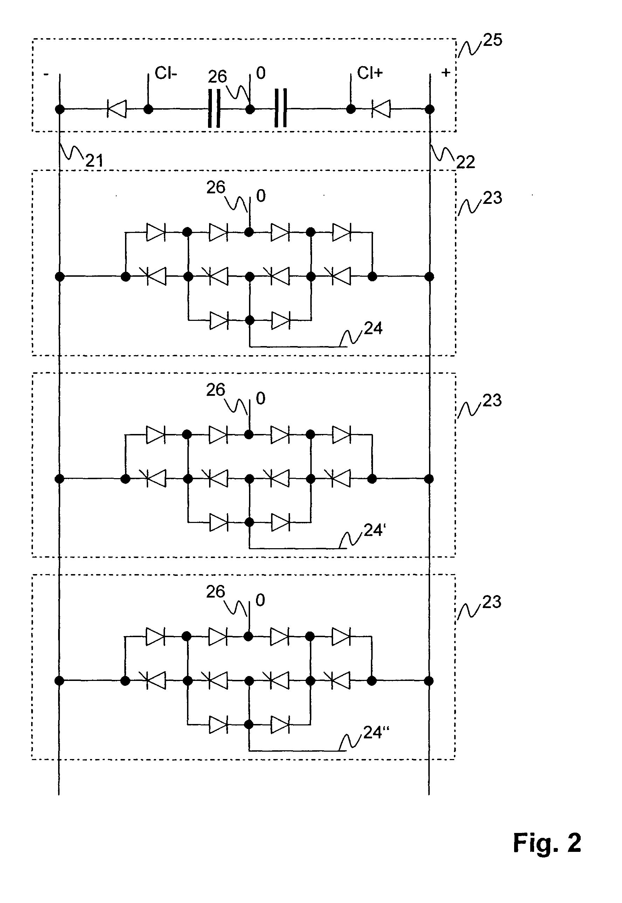

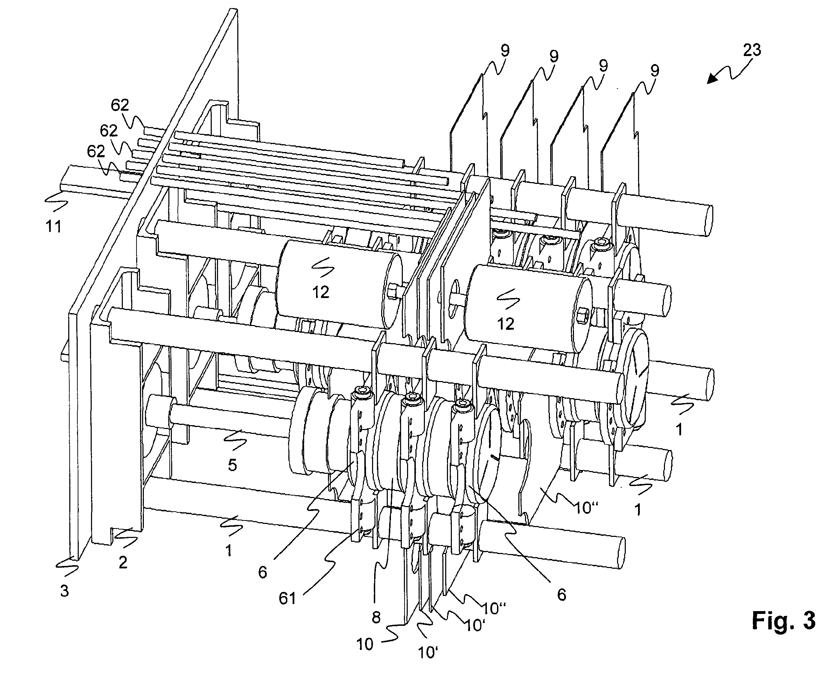

Figur 1 zeigt eine perspektivische Ansicht dreier erfindungsgemässer Spannstapelsätze 32 in einem gemeinsamen Rahmen. Die Spannstapelsätze 32 sind übereinander angeordnet und bestehen jeweils aus drei Spannstapeln. Der Rahmen weist Rahmenstangen 1, Stangenhalter 2, in Figur 3 sichtbare Stirnplatten 3 und Stirnplattenversteifungen 4 auf, welche zusammen die übrigen Elemente der Spannstapelsätze 32 tragen. Die Rahmenstangen 1 sind an den Stangenhaltern 2 befestigt, welche wiederum an den Stirnplatten 3 befestigt, welche durch die Stirnplattenversteifungen 4 versteift sind. Je zwei Rahmenstangen 1 und Stangenhalter 2 bilden einen Spannstapel. Die elektrische Schaltung und Details von Figur 1 werden anhand der Figuren 2 und 3 erklärt:
Figur 2 zeigt schematisch einen mehrphasigen Dreipunkt-Stromrichter mit einem Minuspol 21, einem Pluspol 22 und einem Neutralpunkt 26, welche beispielsweise Anschlüsse eines Gleichspannungszwischenkreises eines Umrichters sind. An diese Anschlüsse sind mehrere Phasenbausteine 23 sowie ein Clampkreis 25 angeschlossen. Ein Phasenbaustein 23 weist in bekannter Weise als Dreipunktschaltung angeordnete Leistungshalbleiterbauelemente (LH) und einen Phasenanschluss 24,24',24" auf. Diese LH sind schaltende Bauelemente oder Dioden. Die schaltenden Bauelemente sind vorzugsweise GCTs oder IGCTs. Ein Phasenbaustein 23 schaltet jeweils den Minuspol 21, Pluspol 22 oder Neutralpunkt 26 auf den jeweiligen Phasenanschluss 24,24',24". Der Clampkreis 25 weist in Serie geschaltete Dioden und Kondensatoren auf und dient zur Begrenzung der Spannungen des Gleichspannungskreises auf eine negative Clampspannung CL- respektive eine positive Clampspannung CL+. Ein Stromrichter kann mehr als nur drei Phasenbausteine 23 aufweisen. Die in Figur 1 gezeigte Anordnung weist insgesamt sechs Phasenbausteine 23 sowie zwei Clampkreise 25 auf.

Figur 3 zeigt eine perspektivische Ansicht einer Hälfte eines Spannstapelsatzes 32 von Figur 1, also einen einzelnen Phasenbaustein 23. Ein Ausschnitt einer der in Figur 1 und den folgenden perspektivischen Ansichten weggelassenen Stirnplatten 3 ist hier abgebildet. Zusätzlich zu den bereits erwähnten Elementen sind Druckstangen 5 abgebildet, welche Stapel von Kühlkörpern 6 und LH 8 zusammendrücken. Weitere Druckstangen befinden sich rechts von den Kühlkörpern 6 und in Linie mit den gezeigten Druckstangen 5. Die weiteren Druckstangen sind jedoch in Figur 3 und in den übrigen Abbildungen nicht eingezeichnet. Die Kühlkörper 6 sind von Kühlwasser durchspült und weisen Kühlwasseranschlüsse 61 zum Anschluss von nicht eingezeichneten Kühlwasserschläuchen auf. Diese Kühlwasserschläuche liegen in derselben Ebene wie der jeweilige Kühlkörper 6, so dass ein Zugriff auf die LH 8 frei ist.

Von den LH 8 sind die schaltenden, also beispielsweise die IGCTs, mit Ansteuerplatinen 9 versehen, welche eine elektronische Schaltung zur Ansteuerung der IGCTs tragen. Diese Ansteuerplatinen 9 befinden sich vorzugsweise an einer Vorderseite des Spannstapelsatzes 32. Dementsprechend befinden sich die IGCTs in einem vorderen Spannstapel des Spannstapelsatzes 32. Zwischenkreisbleche 10,10',10" bilden eine elektrische Verschienung und verbinden mehrere übereinanderliegende Kühlkörper 6 und Phasenbausteine 23 elektrisch miteinander. Dabei bilden beispielsweise ein erstes Zwischenkreisblech 10 den Minuspol 21, ein zweites und drittes Zwischenkreisblech 10' den Neutralpunkt 26 und ein viertes Zwischenkreisblech 10" den Pluspol 22. Am zweiten und dritten Zwischenkreisblech 10' ist je ein Clampkondensator 12 des Clampkreises 25 angeschlossen. Die Ausbildung der Verschienung durch Bleche verringert die Streuinduktivitäten des Umrichters.

Die Stirnplatte 3 weist Durchführungen auf, durch welche Stromschienen 11 und Kühlwasserleitungen 62 geführt sind. Die Kühlwasserleitungen 62 sind durch nicht eingezeichnete Kühlwasserschläuche mit Kühlwasseranschlüssen 61 der Kühlkörper 6 verbunden. Einige Elemente, so beispielsweise weitere Druckstangen, Anschlüsse der Clampkondensatoren 12 und eine Aufhängung der LH 8 sind der Übersichtlichkeit halber nicht eingezeichnet.

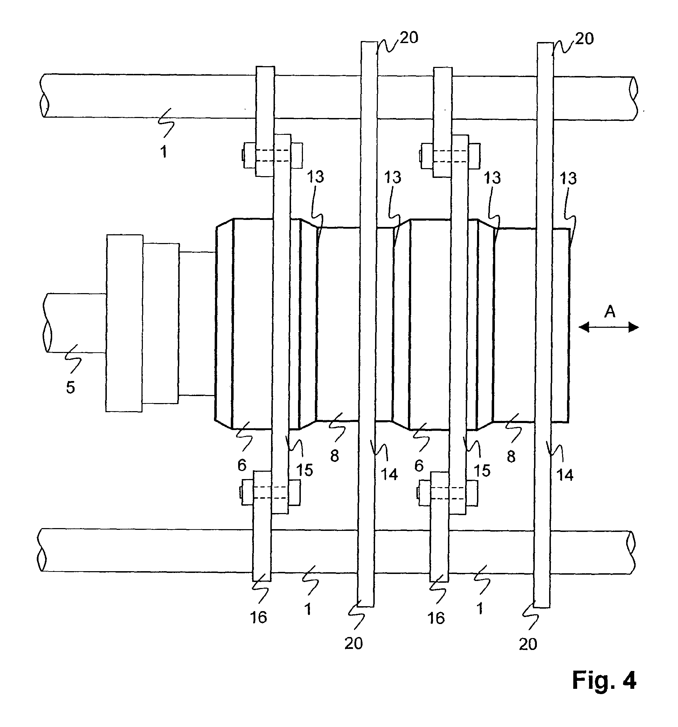

Figur 4 zeigt eine schematische Detailansicht eines erfindungsgemässen Spannstapels eines Spannstapelsatzes 32 in einer ersten Ausführungsform der Erfindung. Die Ansicht zeigt die Vorderseite des vorderen Spannstapels des Spannstapelsatzes 32. Die Ansteuerplatinen 9 der IGCTs sind der Klarheit halber nicht eingezeichnet. Der Spannstapel weist LH 8 und Kühlkörper 6 auf, welche entlang einer horizontal verlaufenden Achsrichtung A des Spannstapels in Reihe angeordnet sind.

Ein LH 8 weist ein zylindrisches Gehäuse auf, welches an beiden Stirnseiten zur elektrischen und thermischen Ankopplung mit flächigen, runden Elektroden (Anoden, Kathoden) versehen ist. Im Halbleiterstapel ist jeweils auf beiden Seiten eines LH 8 ein Kühlkörper 6 derart angeordnet, dass eine seiner Kontaktflächen 13 mit einer der Elektroden des LH 8 in Kontakt kommt. In einem verspannten Zustand des Spannstapels sind LH 8 und Kühlkörper 6 durch Druckstangen 5 in Achsrichtung A gegeneinander gepresst. Die Kühlkörper 6 sind mit Flanschen oder Halterungen 15 versehen und über isolierende erste Verbindungselemente 16 mit der Rahmenstange 1 verbunden. In einer anderen Variante der Erfindung sind Kühlkörper 6 mit einer Kühlkörperhalterung 15 fest verbunden, wobei die Kühlkörperhalterung 15 vorzugsweise eine Platte oder ein Formteil aus isolierendem Material ist. Diese Kühlkörperhalterung 15 ist mittels der ersten Verbindungselemente 16 mit dem Rahmen verbunden. In einer weiteren, nicht dargestellten Variante der Erfindung ist die Kühlkörperhalterung 15 unmittelbar mit dem Rahmen verbunden. Vorzugsweise weist die Kühlkörperhalterung 15 Mittel zum Führen der Kühlwasserleitungen auf. Die Verbindung mit dem Rahmen erlaubt eine Verschiebung der Kühlkörperhalterung 15 entlang der Achsrichtung A des Spannstapels. Dadurch kann sich der Kühlkörper 6 beim Spannen resp. Lösen des Spannstapels ebenfalls in Achsrichtung A bewegen.

Ein LH 8 ist mit einem Trägerelement, beispielsweise einer Platte 14 aus vorzugsweise isolierendem Material fest verbunden. Die Platte liegt in einer Montageebene, welche senkrecht zu einer Achsrichtung A des Spannstapels liegt.

Erfindungsgemäss hält die Platte 14 mehrere LH 8 und ist mittels gemeinsamer Befestigungsmittel mit dem Rahmen lösbar verbunden. In der ersten Ausführungsform der Erfindung sind diese gemeinsamen Befestigungsmittel Haken oder hakenartige Ausbildungen oder Führungsmittel 20 der Platte 14. Dank der Führungsmittel 20 ist die Platte 14 an den Druckstangen 5 des Rahmens einhängbar. In einem entspannten Zustand der Spannstapel des Spannstapelsatzes 32 ist die Platte 14 in Achsrichtung A bewegbar. Diese Bewegung wird dadurch erleichtert, dass der Spannstapel horizontal liegt und dadurch ein Element des Spannstapels, beispielsweise ein LH 8, nicht durch das Gewicht der übrigen Elemente belastet wird. Dadurch dass ein LH 8 durch eine Platte 14 gehalten wird, fällt er bei entspanntem Spannstapel nicht aus diesem heraus.

Die Platte 14 ist mit Aussparungen versehen, in welche drei LH 8,8',8" eingesetzt und mit der Platte 14 fest verbunden sind. Somit liegen die drei LH 8,8',8" in der gemeinsamen Montageebene und sind bei entspanntem Spannstapelsatz 32 gemeinsam in eine Montagerichtung aus dem Spannstapelsatz 32 entfernbar respektive in den Spannstapelsatz 32 einsetzbar. Zum Auswechseln eines beliebigen LH 8 muss somit nur der Spannstapelsatz 32 entspannt werden und die entsprechende Platte 14 herausgezogen werden. Die Montagerichtung liegt senkrecht zu einer Achsrichtung A des Spannstapels und senkrecht zur Bildebene der Figur 4.

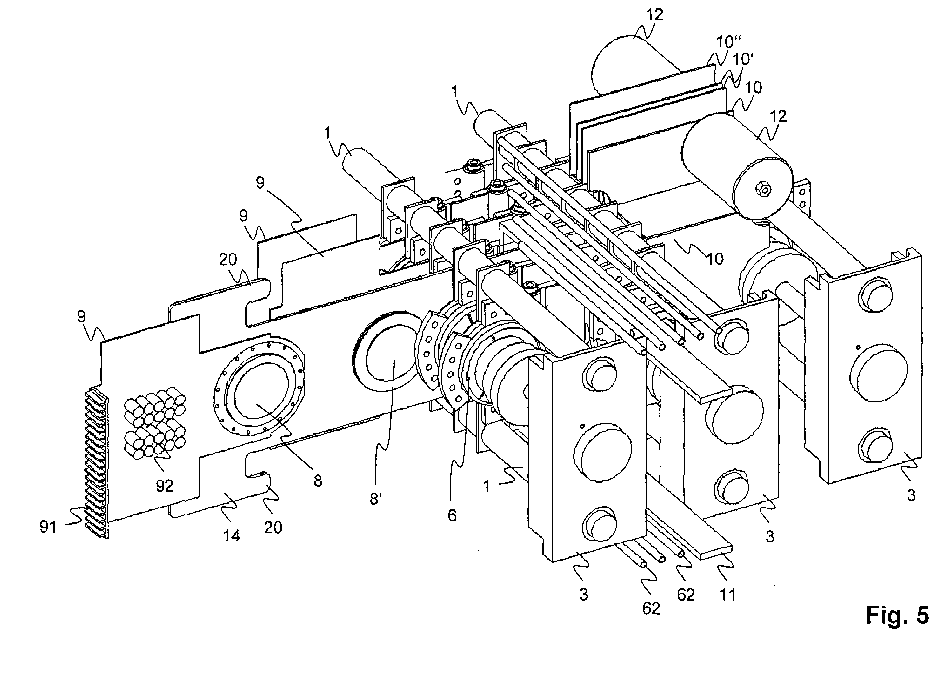

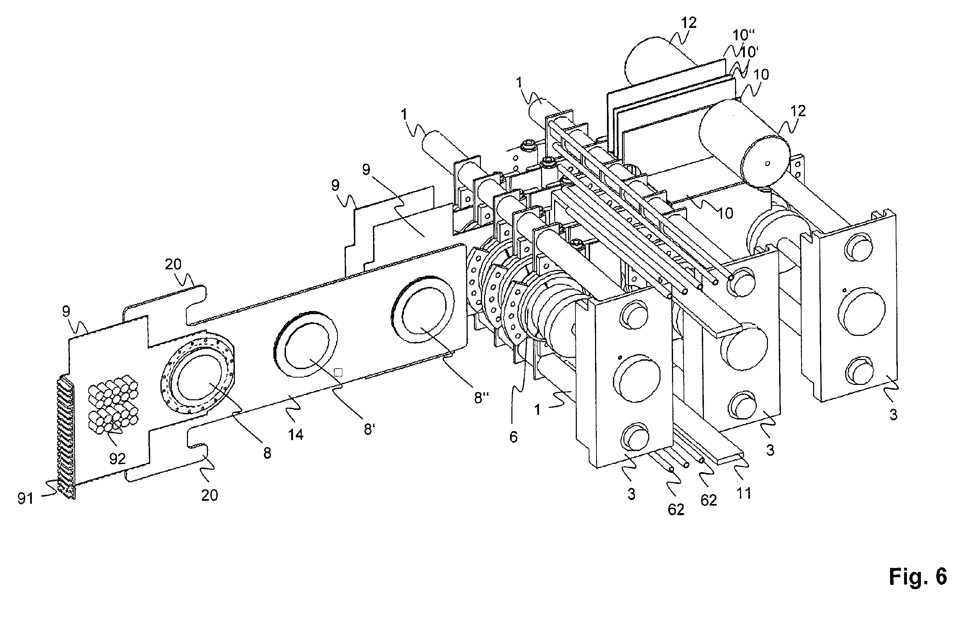

Figuren 5 und 6 zeigen perspektivische Detailansichten eines erfindungsgemässen Spannstapels in der ersten Ausführungsform der Erfindung. Dabei ist eine Platte 14 teilweise respektive ganz in Montagerichtung herausgezogen gezeichnet. Die Montagerichtung führt in dieser Ausführungsform also durch hintereinanderliegende Spannstapel. Für zwei Ebenen, welche hinter der herausgezogenen Platte 14 liegen, ist nur die entsprechende Ansteuerplatine 9, aber nicht die entsprechende Platte gezeichnet. In diesen Figuren ist die Anordnung der Ansteuerplatine 9 relativ zu Platte 14 erkennbar. Dabei ist die Ansteuerplatine 9 fest mit einem zugeordneten IGCT 8 und/oder der Platte 14 verbunden. Die Ansteuerplatine 9 weist nebst nicht gezeichneten elektronischen Bauelementen einen Kühlkörper 91 und einen Kondensatorsatz 92 auf. In einzelnen Ebenen des Spannstapelsatzes 32 weist eine Platte 14 nur zwei anstelle von drei LH 8 auf.

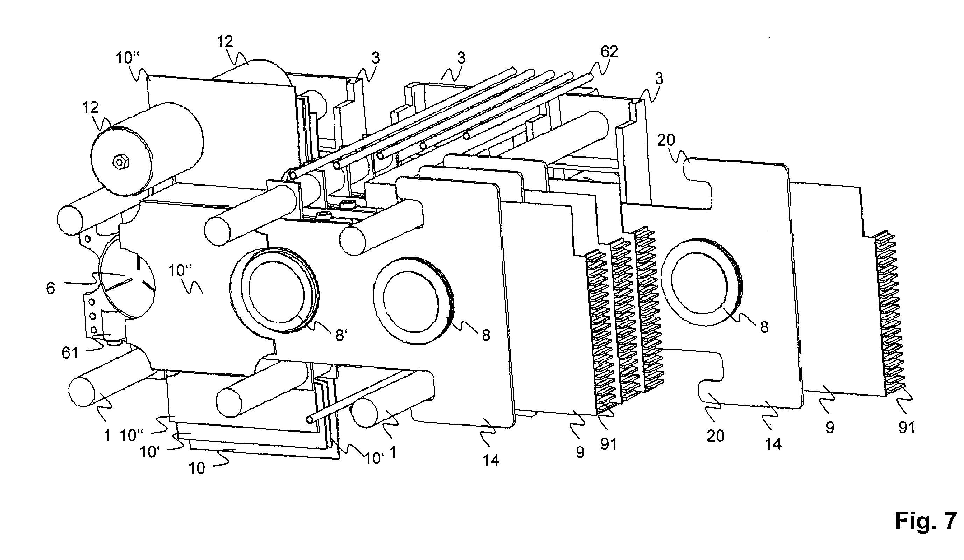

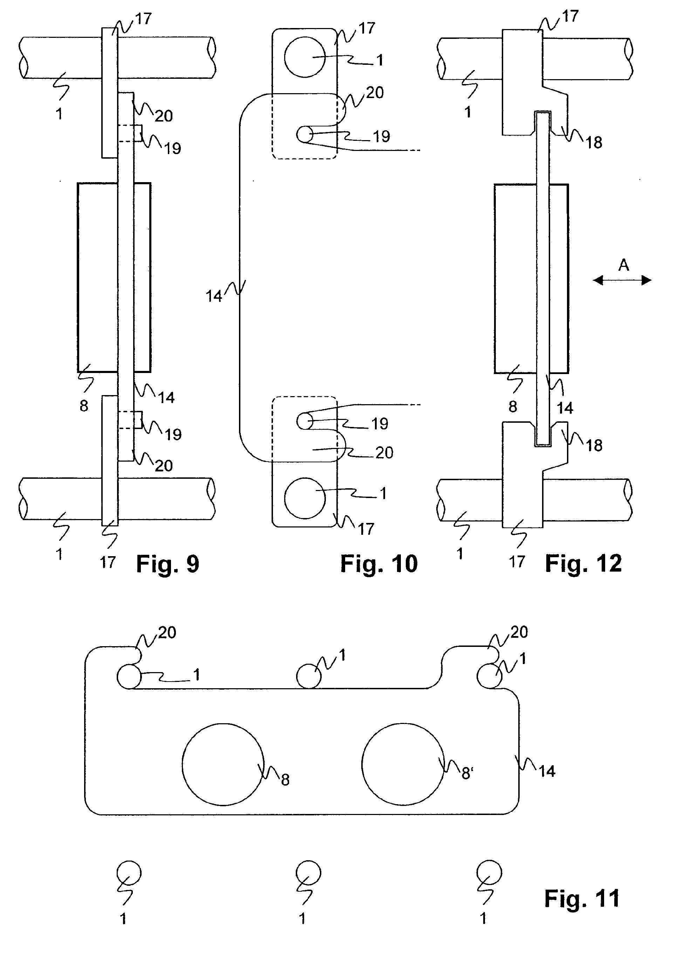

Figur 7 zeigt eine ähnliche Anordnung wie Figur 5 aus einer anderem Blickwinkel. Es sind jedoch die Platten 14 von vier Ebenen gezeichnet, wobei eine Platte 14 teilweise herausgezogen ist. Weiter sind insbesondere die Zwischenkreisbleche 10,10',10" und ihre Anordnung sichtbar: Die beiden mittleren Zwischenkreisbleche 10' liegen in einer ersten Ebene mit Kühlkörpern 6 und sind im wesentlichen eben. Die beiden äusseren Zwischenkreisbleche 10,10" sind derart gebogen, dass ein mittlerer Bereich des jeweiligen Bleches in einer zweiten resp. dritten Ebene mit Kühlkörpern 6 liegt. Diese Anordnung wird durch Figur 8 verdeutlicht, welche schematisch eine Ansicht von Zwischenkreisblechen 10,10',10" aus der Montagerichtung zeigt. Erst durch eine solche Anordnung der Bleche respektive Verschienung lässt sich die erfindungsgemässe Platte 14 durch den ganzen Spannstapelsatz 32 führen.

Figuren 9 und 10 zeigen schematische Detailansichten einer Variante der ersten Ausführungsform der Erfindung. Darin ist die Platte 14 mittels gemeinsamer Befestigungsmittel über zweite Verbindungselemente 17 mit dem Rahmen lösbar verbunden. Figur 9 zeigt eine Ansicht in Montagerichtung auf die Vorderseite eines Spannstapels mit einem LH 8, seiner Trägerplatte 14 und deren Befestigung an zwei Rahmenstangen 1. Figur 10 zeigt eine Aufsicht auf die Trägerplatte 14 und deren Befestigung, in Achsrichtung A des Spannstapels gesehen. Beide Figuren zeigen ein zweites Verbindungselement 17, welches an einer Rahmenstange 1 befestigt ist und einen Führungsvorsprung 19 aufweist. Die Platte 14 weist als gemeinsame Befestigungsmittel hakenförmige Ausbildungen der Platte 14 oder Führungsmittel 20 auf, welche am Führungsvorsprung 19 eingehängt sind.

Figur 11 zeigt schematische eine weitere Variante der ersten Ausführungsform der Erfindung . Darin weist die Platte 14 nur auf einer Seite Führungsmittel 20 auf, welche an den Rahmenstangen 1 einhängbar sind.

In einer bevorzugten Ausführungsform der Erfindung sind die Führungsmittel 20 als einrastende und wieder lösbare Verbindungen ausgebildet. Beim Einschieben des Trägerelements 14 rasten die Führungsmittel 20 am zweiten Verbindungselement 17 respektive am Rahmen ein. Bei Zugbeanspruchung in Montagerichtung geben die Führungsmittel 20 das Trägerelement 14 frei.

Figur 12 zeigt eine schematische Detailansicht einer zweiten Ausführungsform der Erfindung. Die Figur zeigt eine Ansicht in Montagerichtung. In dieser zweiten Ausführungsform sind die gemeinsamen Befestigungsmittel Führungsschienen 18, welche die Platte 14 in die Montagerichtung führen. Die Führungsschienen 18 sind vorzugsweise an den zweiten Verbindungselement 17 ausgebildet und vorzugsweise an mindestens zwei hintereinanderliegenden Rahmenstangen 1 befestigt. Diese Befestigung erlaubt eine zumindest leichte Verschiebung des LH 8 entlang der Achsrichtung A. Dadurch lassen sich bei entspanntem Spannstapel die Elemente des Spannstapels lockern, so dass eine Platte 14 herausgezogen werden kann.

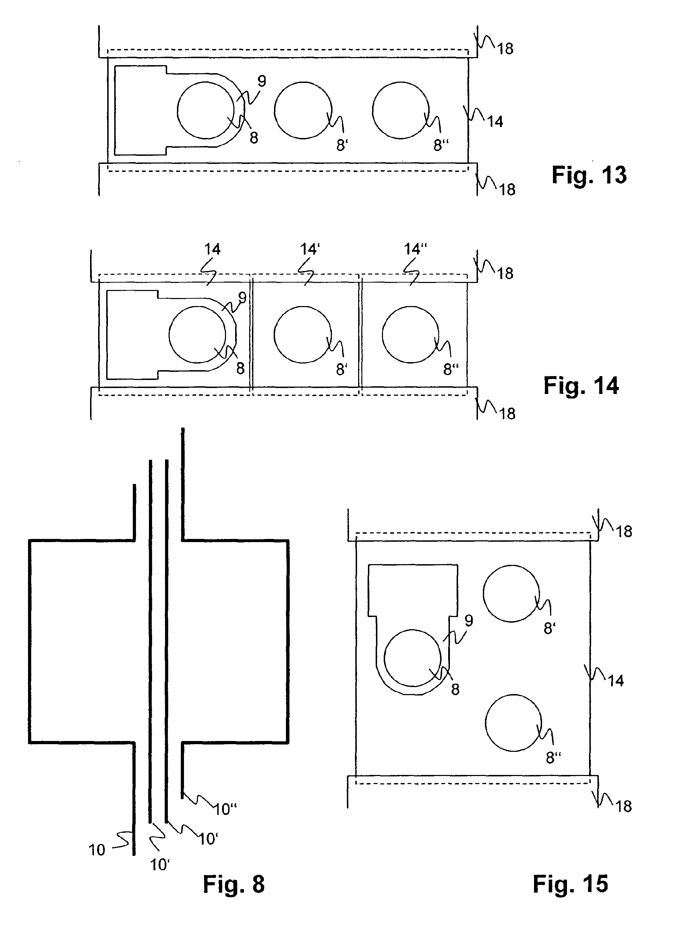

Figuren 13 bis 15 zeigen schematische Darstellungen verschiedener Varianten von Platten 14 gemäss der zweiten Ausführungsform der Erfindung. Die Figuren zeigen jeweils eine Aufsicht in Achsrichtung A auf eine Platte 14. Die Platte 14 mit den LH 8,8',8" ist in die Führungsschienen 18 eingeschoben, welche mit dem nicht eingezeichneten Rahmen verbunden sind.

In Figur 13 sind die LH 8,8',8" auf dem Trägerelement 14 im wesentlich auf einer Linie und auf einer gemeinsamen Platte 14 angeordnet.

Figur 14 zeigt getrennte Trägerelemente oder Teilplatten 14,14',14", welche in denselben Führungsschienen 18 in einer gemeinsamen Montagebene geführt sind. Dadurch lassen sich die in den einzelnen Teilplatten 14,14',14" gehaltenen LH 8,8',8" nacheinander in Montagerichtung einschieben resp. herausziehen. Damit lassen sich auch einzelne LH 8,8',8" austauschen und an Lager halten.

In Figur 15 sind die LH 8,8',8" auf der Platte 14 im wesentlich in einem Dreieck angeordnet. Dementsprechend sind die Spannstapel des dazugehörigen Spannstapelsatzes 32 ebenfalls, parallel zu einander verlaufend, in einem Dreieck angeordnet.

Allen Ausführungsformen der Erfindung ist gemeinsam, dass LH 8 eines Spannstapelsatzes 32, welche in einer gemeinsamen Ebene liegen, innerhalb dieser Montageebene in eine gemeinsame Montagerichtung entfernbar resp. einsetzbar sind. Dies geschieht durch eine lineare Bewegung der LH 8 in die Montagerichtung. Dies hat den Vorteil, dass auf alle hintereinander liegenden LH 8,8',8" aus einer gemeinsamen Richtung zugegriffen werden kann. Dabei ist eine Stirnfläche der Platte 14 relativ klein. Dadurch lassen sich, wie in Figur 1 gezeigt, mehrere erfindungsgemässe Spannstapelsätze 32 übereinander anordnen, ohne dass die Austauschbarkeit der LH 8,8',8" beeinträchtigt wird.

Die elektrische Verbindung zwischen Elektroden der LH 8 geschieht über die Kühlkörper 6. Die Kühlkörper 6 sind über Verschienungen elektrisch verbunden. In der vorliegenden Erfindungen wird die Verschienung mindestens teilweise durch Kupferbleche wie die Zwischenkreisbleche 10,10',10" gebildet.

In einer weiteren Ausführungsform der Erfindung sind Kühlkörper 6 aus mehreren Spannstapeln eines Spannstapelsatzes 32 einander jeweils zugeordnet und befinden sich in einer gemeinsamen Ebene, welche senkrecht zu den Achsrichtungen A der Spannstapel liegt. Dabei werden die einander zugeordneten Kühlkörper 6 nicht einzeln, sondern mittels einer gemeinsamen Kühlkörperhalterung mit dem Rahmen verbunden. Die gemeinsame Halterung mehrerer Kühlkörper verringert die Anzahl von Teilen eines Spannstapelsatzes und vereinfacht die Montage.

### Bezugszeichenliste

- A: Achsrichtung
- 1: Rahmenstange
- 2: Stangenhalter
- 3: Stirnplatte
- 4: Stirnplattenversteifung
- 5: Druckstange
- 6: Kühlkörper
- 61: Kühlwasseranschluss
- 62: Kühlwasserleitung
- 8: Leistungshalbleiterbauelement (LH)
- 9: Ansteuerplatine
- 10,10',10": Zwischenkreisbleche
- 11: Stromschiene
- 12: Clampkondensator
- 13: Kontaktfläche
- 14: Trägerelement, Platte
- 15: Kühlkörperhalterung
- 16: erstes Verbindungselement
- 17: zweites Verbindungselement
- 18: Führungsschiene
- 19: Führungsvorsprung
- 20: Führungsmittel
- 21: Minuspol
- 22: Pluspol
- 23: Phasenbaustein
- 24,24',24": Phasenanschluss
- 25: Clampkreis
- 26: Neutralpunkt
- 32: Spannstapelsatz
- 91: Kühlkörper
- 92: Kondensatorsatz

## Patentansprüche

1. Halbleiter-Spannstapelsatz (32), mit mindestens zwei Spannstapeln, wobei jeder der Spannstapel mehrere Leistungshalbleiterbauelemente (LH) (8) und mehrere Kühlkörper (6) aufweist, und die LH (8) und Kühlkörper (6) eines Spannstapels entlang einer horizontal verlaufenden Achsrichtung (A) des Spannstapels in Reihe angeordnet sind, die Spannstapel parallel zueinander in einem gemeinsamen Rahmen angeordnet sind, und die LH (8) auf Trägerelementen (14) montiert sind, **dadurch gekennzeichnet,**
**dass** LH (8) aus unterschiedlichen Spannstapeln einander zugeordnet sind, diese einander zugeordneten LH (8) sich in einer gemeinsamen Montageebene befinden, welche senkrecht zu den Achsrichtungen A der Spannstapel liegt, und einander zugeordnete LH (8) in eine gemeinsame Montagerichtung, welche in der Montageebene liegt, aus dem Spannstapelsatz (32) entfernbar respektive in den Spannstapelsatz (32) einsetzbar sind.

2. Halbleiter-Spannstapelsatz (32) gemäss Anspruch 1, **dadurch gekennzeichnet, dass** die einander zugeordneten LH (8) über gemeinsame Befestigungsmittel zur Befestigung am Rahmen verfügen.

3. Halbleiter-Spannstapelsatz (32) gemäss Anspruch 1, **dadurch gekennzeichnet, dass** die einander zugeordneten LH (8) auf einem gemeinsamen Trägerelement (14) montiert sind.

4. Halbleiter-Spannstapelsatz (32) gemäss Anspruch 1, **dadurch gekennzeichnet, dass** die einander zugeordneten LH (8) auf einzelnen Trägerelementen (14,14',14") montiert sind und nacheinander entfernbar respektive einsetzbar sind.

5. Halbleiter-Spannstapelsatz (32) gemäss Anspruch 1, **dadurch gekennzeichnet, dass** die Trägerelemente (14) in Führungsschienen (18) geführt sind.

6. Halbleiter-Spannstapelsatz (32) gemäss Anspruch 1, **dadurch gekennzeichnet, dass** die Trägerelemente (14) mittels Führungsmitteln (20) am Rahmen oder an Verbindungselementen (17) eingehängt sind.

7. Halbleiter-Spannstapelsatz (32) gemäss Anspruch 1, **dadurch gekennzeichnet, dass** Kühlkörper (6) durch eine Verschienung (10,10',10") elektrisch verbunden sind, und diese Verschienung (10,10',10") mindestens teilweise aus Blechen besteht.

8. Halbleiter-Spannstapelsatz (32) gemäss Anspruch 1, **dadurch gekennzeichnet, dass** Kühlkörper (6) aus unterschiedlichen Spannstapeln einander zugeordnet sind,
diese einander zugeordneten Kühlkörper (6) sich in einer gemeinsamen Ebene befinden, welche senkrecht zu den Achsrichtungen A der Spannstapel liegt,
und die einander zugeordneten Kühlkörper (6) eine gemeinsame Kühlkörperhalterung aufweisen, welche die Kühlkörper (6) mit dem Rahmen verbindet.

9. Halbleiter-Spannstapelsatz (32) gemäss Anspruch 1, **dadurch gekennzeichnet, dass** die LH (8) durch Zugriff von nur einer Seite des Spannstapelsatzes (32) austauschbar sind.

10. Halbleiter-Spannstapelsatz (32) gemäss Anspruch 1, **dadurch gekennzeichnet, dass** bei entspannten Spannstapeln die LH (8) ohne mechanische Hilfsmittel entfernbar und einsetzbar sind.
